# FASCICULE DE BREVET EUROPEEN

(11) **EP 0 814 236 B1**
(45) Date de publication et mention de la délivrance du brevet: **13.03.2002**
(21) Numéro de dépôt: 97401324.5
(22) Date de dépôt: 12.06.1997
(51) Int. Cl.: F01D 25/16, F01D 21/04

(54) **Support de palier permettant de maintenir en fonctionnement un turbomoteur aprés apparition d'un balourd**
Lagerträger, der es erlaubt ein Turbotriebwerk auch nach dem Auftreten einer Unwucht in Betrieb zu halten
Bearing support which allows to keep a turbofan engine functioning after the appearance of an imbalance

(30) Priorité: 13.06.1996 FR 9607328
(43) Date de publication de la demande: 29.12.1997
(73) Titulaire: SNECMA MOTEURS, 75015 Paris (FR)
(72) Inventeur: Gerez, Valerio, 91330 Yerres (FR)

(56) Documents cités:
- FR-A- 2 115 316
- FR-A- 2 181 366
- FR-A- 2 452 034
- FR-A- 2 453 273
- GB-A- 1 418 907
- GB-A- 2 281 105
- US-A- 5 433 584

## Description

L'invention propose un procédé permettant de maintenir en fonctionnement dégradé un turbomoteur pour aéronef après apparition d'un balourd accidentel sur un rotor provoqué par exemple par une rupture d'aube de soufflante sous l'impact d'un corps étranger.

L'invention propose aussi un dispositif consistant en un support de palier spécialement conçu pour mettre en oeuvre le procédé.

Un balourd sur un rotor de turbomoteur pour aéronef en fonctionnement provoque un effort tournant centrifuge qui se transmet à la structure du turbomoteur par l'intermédiaire des paliers et supports de paliers, et du contact rotor-stator pour les très forts balourds, puis à la structure de l'avion. Il y a deux sortes de balourds : les balourds de fabrication et les balourds accidentels. Les balourds de fabrication sont ramenés à des valeurs faibles, bien que non négligeables, grâce au soins apportés à la fabrication des rotors. Les balourds accidentels proviennent principalement de ruptures d'aubes. Ces balourds peuvent être importants et provoquer un effort tournant qui peut prendre des valeurs très élevées nécessitant un arrêt immédiat du turbomoteur, sous peine de destruction des structures de turbomoteur et de l'avion. Une rupture d'aube se produit essentiellement à proximité du sol pendant les phases de décollage et d'atterrissage de l'avion, par la pénétration accidentelle de corps étrangers tels des oiseaux dans l'entrée d'air du turbomoteur. Un tel accident nécessitant l'arrêt immédiat du turbomoteur peut entrainer dans ces circonstances l'écrasement de l'avion. Un premier problème à résoudre est en conséquence de maintenir le turbomoteur en fonctionnement malgré le balourd provoqué par exemple par une rupture d'aube, au moins pendant une durée limitée et avec une poussée réduite, le temps de faire atterrir l'avion.

Les turbomoteurs modernes sont généralement du type dit "à double flux" et comportent un premier étage d'aubes tournantes appelé "soufflante" qui assure notamment sur les turbomoteurs subsoniques l'essentiel de l'effort de propulsion. Ces aubes de soufflante sont très vulnérables, car elles sont placées tout à l'avant du turbomoteur car elles sont minces, de grande taille et tenues par une extrémité au moyen du rotor alors que l'autre extrémité à la périphérie du rotor est libre. Bien que la rupture se produise habituellement vers l'extrémité libre de l'aube, le balourd généré peut être important du fait de la grande taille de l'aube. A titre indicatif, sur les gros turbomoteurs à double flux, le balourd peut atteindre 3 à 4 kg.m produire, compte tenu de l'élasticité de la structure et des phénomènes de résonance qui en résultent, un effort tournant de l'ordre de 10⁵DaN à 5000 tours par minute. Un second problème est donc de maintenir en fonctionnement le turbomoteur avec un balourd aussi important.

Pour améliorer le rendement d'un turbomoteur en fonctionnement normal, il est nécessaire de réduire les fuites d'air entre les aubes tournantes et les parois intérieures du carter en regard desdites aubes tournantes. Pour cela, on agrandit le jeu entre les parois intérieures et les aubes, et on tapisse ces parois intérieures avec un matériau tendre appelé abradable dont l'épaisseur est suffisante pour interférer avec les aubes. En tournant, les aubes rabotent l'abradable et en ajustent l'épaisseur aux dimensions exactes du rotor, ce qui réduit les fuites à un minimum. Un troisième problème est donc de ne pas augmenter ces fuites pendant le fonctionnement normal du turbomoteur.

Un rotor à aubes et notamment une soufflante présente inévitablement un balourd de fabrication qui est d'autant plus important que la soufflante est lourde et de grand diamètre. Pendant la rotation, ce balourd associé à l'élasticité naturelle de la structure du turbomoteur provoque un effort tournant radial et centrifuge avec des points de résonnance correspondant aux modes propres de l'ensemble rotor + structure, cet effort tournant provoquant une fatigue accélérée des paliers et de la structure du moteur. Pour remédier à cela, les paliers du rotor et plus particulièrement son palier avant sont habituellement tenus par un support de palier élastique qui a pour effet principal de réduire les vibrations et de réduire les efforts transmis à la structure. Le brevet EP 63 993 divulgue un tel palier comportant un élément élastique à débattement dans un plan radial, l'élément élastique étant en forme de tronc de cône ajouré formant cage d'écureuil, le débattement de cet élément élastique étant toutefois limité radialement par un élément rigide lui aussi en forme de tronc de cône.

Un tel palier présente cependant l'inconvénient d'augmenter l'amplitude des vibrations radiales du rotor, ce qui provoque un rabotage supplémentaire des abradables générateur de fuites d'air. Dans la pratique, l'homme du métier doit en conséquence limiter l'élasticité d'un tel palier au strict nécessaire pour réduire les vibrations résultant du faible balourd de fabrication du rotor. Ce palier ne permet pas en conséquence de résoudre le problème posé par le balourd accidentel du rotor.

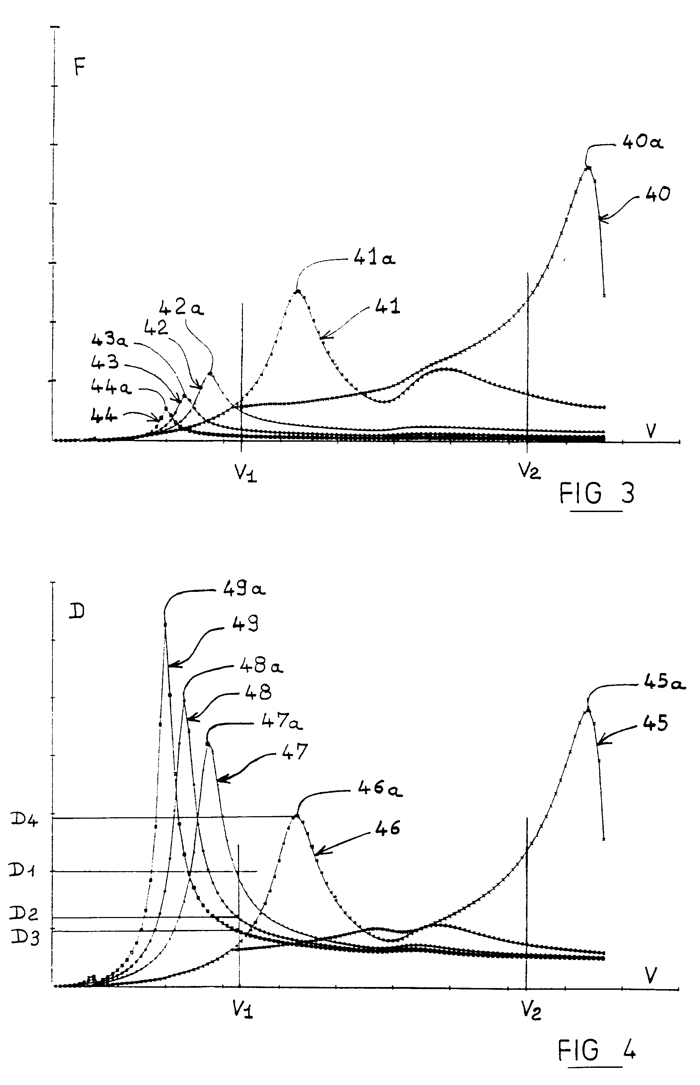

On connaît par le brevet FR 2 453 273 un turbomoteur comportant un support de palier maintenant deux paliers avec des niveaux de raideur différents, soit un premier palier vers l'arrière tenu rigidement et un second palier vers l'avant susceptible de se déplacer radialement avec une raideur nulle lorsque le support référencé 36 sur la figure 3 est plastiquement déformable, ce déplacement pouvant également se faire avec une raideur non précisée lorsque le support 36 est en caoutchouc. Ce support de palier coopère avec un arbre axialement en deux parties reliées radialement entre elles de façon flexible afin de ne pas transmettre à la structure du turbomoteur un éventuel balourd naissant sur la partie avant de l'arbre. Une telle disposition atteint effectivement le résultat annoncé mais présente l'inconvénient de nécessiter un arbre d'une grande complexité et de masse élevée.

On connait par le brevet FR 2 463 853, à priorité de la demande de brevet US 69,196 avec délivrance sous le numéro 4 289 360, un turbomoteur comportant un support de palier normalement rigide, mais qui peut être libéré par la rupture d'éléments de liaison sous l'effet du balourd important résultant de la rupture d'une aube. le rotor tournant dans un carter avec un jeu agrandi comblé par un abradable plus épais. Le rotor tend alors à tourner autour de son nouvel axe d'inertie ce qui réduit le balourd et l'effort exercé sur la structure du turbomoteur. Un tel dispositif ne peut toutefois fonctionner correctement qu'avec un amortissement efficace qui est dans ce brevet assuré par des segments mobiles les uns par rapport aux autres et séparés par des films d'huile. Ce dispositif n'est guère envisageable sur les gros turbomoteurs pour aéronefs, car ils nécessitent des moyens d'amortissement dont la masse et la taille seraient excessives, ainsi que des moyens de refroidissement importants pour préserver l'huile d'un échauffement excessif qui en provoquerait la carbonisation.

On connait aussi une solution plus particulièrement adaptée à l'étage de soufflante consistant à équiper le turbomoteur d'un support de palier susceptible de se libérer aussi par rupture d'éléments de liaison sous l'effet du balourd important provoqué par la rupture d'une aube, la soufflante tournant dans le carter avec un jeu plus réduit comblé par de l'abradable. Après rupture d'une aube et la libération du palier, la soufflante tendant à tourner autour de son nouvel axe d'inertie rabote l'abradable et arrive en appui par le sommet des aubes contre le carter, ce carter guidant alors la rotation de la soufflante et assurant ainsi la fonction de palier. Une telle solution permet de faire tourner la soufflante pendant un temps très limité et d'obtenir ainsi du moteur une poussée même faible. Le carter étant rigide, cette solution déplace le mode propre vers les vitesses de rotation élevées, ce qui abaisse l'effort tournant aux basses vitesses, mais augmente ce même effort tournant aux vitesses élevées, cet effort pouvant atteindre par exemple 10⁵DaN à 5000 tours par minutes. Cette solution présente ainsi quatre inconvénients :
1) L'effort tournant maximal se produit au moment le plus critique du trajet de l'avion, c'est à dire au décollage alors que les turbomoteurs tournent à leur vitesse maximale pour fournir une poussée maximale.
2) Une énergie importante est produite par le frottement des sommets des aubes contre le carter, cette énergie pouvant faire vibrer les aubes suivant une direction transversale à la pale et provoquer ainsi des ruptures supplémentaires desdites aubes et des risques d'incendie.
3) Le frottement à sec des sommets des aubes contre le carter n'est tolérable que pendant une durée très courte.
4) Le carter doit être renforcé pour assurer cette fonction de palier, ce qui en augmente la masse et le coût. On connait aussi par le brevet US 4 527 910 un support de palier comportant un élément élastique en cage d'écureuil dont le débattement est limité par une couronne fixe et l'énergie ainsi produite par un amortissement visqueux. La couronne fixe est elle-même susceptible d'être libérée par rupture de ses éléments de liaison, ce qui autorise un débattement plus important, l'énergie étant partiellement absorbée par un second amortissement visqueux. Comme cela a déjà été vu, une telle solution n'est guère envisageable sur les gros turbomoteurs pour aéronef, car elle nécessiterait des éléments d'amortissement prohibitifs en dimension et en masse.

L'invention propose un procédé et un dispositif spécialement conçu pour mettre en oeuvre ce procédé et permettant de maintenir un turbomoteur pour aéronef en fonctionnement à une vitesse de rotation du rotor au moins égale à la vitesse de ralenti en vol V1, ceci après l'apparition d'un balourd accidentel sur ce rotor. L'invention s'applique à un turbomoteur dont le rotor est monté sur des paliers et comporte à sa périphérie des aubes qui se déplacent à l'intérieur d'un carter, au moins un support de palier présentant au moins deux niveaux de raideur, un niveau de raideur étant dit "normal" et correspondant à un mode propre du rotor supérieur à V1, le jeu radial E entre les sommets des aubes et la paroi intérieure du carter étant habituellement mais pas obligatoirement occulté par un revêtement abradable. Dans un tel turbomoteur, le mode propre du rotor est supérieur à V1 en fonctionnement normal.

Selon l'invention, un tel résultat est obtenu de la façon suivante :
1) Le support de palier comporte au moins un niveau de raideur dit "faible" correspondant à un mode propre du rotor inférieur à V1,
2) disposer un jeu E au moins égal à une valeur D correspondant au déplacement radial du rotor sous l'effet d'un balourd maximal préétabli, ledit rotor étant tenu par le support de palier avec un niveau de raideur faible, le rotor tournant à la vitesse V1,
3) passer du niveau de raideur normal du support de palier à un niveau de raideur faible après l'apparition d'un balourd préétabli minimal.

Ainsi, le turbomoteur fonctionne dans ses conditions normales tant qu'un balourd accidentel n'est pas apparu sur le rotor. Après l'apparition du balourd, le passage du niveau de raideur normal à un niveau de raideur faible d'un support de palier conformément à l'invention entraîne l'abaissement du mode propre du rotor à une vitesse inférieure à V1, ce qui a pour effet d'abaisser aux vitesses supérieures à V1 l'effort tournant F transmis par le rotor à la structure du turbomoteur, et pour résultat de permettre le fonctionnement du turbomoteur à ces vitesses.

Avantageusement aussi le support de palier sera celui maintenant l'étage de soufflante du turbomoteur, cet étage étant particulièrement exposé aux impacts de corps étrangers et par répercussion aux bris d'aubes.

Avantageusement aussi le passage du niveau de raideur normal à un niveau de raideur faible s'effectue par la rupture d'éléments de liaison frangibles, sous l'effet d'un balourd minimal préétabli.

L'invention propose aussi un support de palier permettant de mettre en oeuvre le présent procédé. Un tel support de palier comporte N>1 éléments élastiques agissant en parallèles et reliant chacun le palier à la structure du moteur, N-1 éléments élastiques effectuant cette liaison au moyen d'éléments de liaison frangibles c'est à dire susceptibles de se rompre sous l'effet de l'effort radial provoqué par un balourd dépassant un niveau minimum prédéterminé.

Dans un mode de réalisation préféré, ces éléments élastiques sont concentriques en forme de fûts ou de parois minces cylindriques ou tronconiques et liés par leurs extrémités d'un côté à la structure du moteur et de l'autre côté au palier. Cette liaison est permanente d'un côté et frangible de l'autre pour N-1 éléments, ces éléments étant disposés axialement et étant sensibles à la rupture sous l'effet d'une contrainte de cisaillement et de traction dans un plan radial à l'axe du rotor.

Le fonctionnement de la turbomachine est le suivant :
1) En marche normale, les éléments élastiques sont solidaires. Les raideurs des éléments élastiques s'additionnent de sorte que la raideur du palier est maximale et permet juste d'absorber le faible effort tournant produit par l'inévitable balourd de fabrication. Le rotor, fermement guidé en rotation par le palier, rabote l'abradable du carter lors de ses premières rotations après montage et produit dans cet abradable un passage juste suffisant, ce qui réduit au maximum les fuites d'air et maintient à un optimum le rendement de la turbomachine en fonctionnement normal.
2) Sous l'effet de l'effort tournant produit par un balourd accidentel, les éléments de liaison frangibles se rompent, l'élément élastique correspondant n'agit plus et le support de palier devient plus souple radialement. Cet assouplissement déplace vers les basses vitesses de rotation le mode propre du rotor avec deux conséquences importantes :
   - l'effort tournant maximum est réduit dans le voisinage du mode propre,
   - l'effort tournant aux vitesses élevées au-delà du mode propre du rotor devient faible, ce qui autorise au moins pendant un temps limité le fonctionnement dégradé de la turbomachine et le maintien d'une poussée, ceci dans le domaine de vol allant du régime de ralenti en vol V1 au régime de pleins gaz V2.

L'homme du métier appelle "consommations de jeu" l'amplitude radiale D du déplacement du rotor par rapport à son axe d'origine, cette amplitude étant égale à l'épaisseur d'abradable raboté. Pendant le fonctionnement dégradé et à V<V1 les consommations de jeu du rotor par rapport au stator augmentent notamment avec la souplesse du support de palier et l'importance du balourd accidentel. De ce fait, l'homme du métier définira un jeu E suffisant entre les sommets des aubes et la paroi intérieure du carter pour que le rotor soit toujours guidé en rotation par le palier après la rupture des éléments frangibles et n'arrive pas ainsi au contact du carter, ceci au moins pour les vitesses de rotation normales du turbomoteur dans son domaine de vol et un degré de dommage préétabli, l'effet procuré par l'invention étant ainsi maintenu.

La présente invention ne saurait être confondue avec le palier divulgué par le brevet EP 63 993. En effet, dans un tel palier il n'y a pas de liaison frangible et l'élément rigide entourant l'élément souple intervient lors du franchissement du mode propre ou en cas de balourd pour limiter l'excursion radiale de l'élément souple, avec pour conséquence un déplacement du mode propre vers les vitesses de rotation élévées et une augmentation correspondante de l'effort tournant résultant du balourd, ce qui est à l'opposé de l'effet produit et du résultat obtenu avec la présente invention.

La présente invention ne saurait non plus être confondue avec le palier divulgué par le brevet US 4 527 910 précité. En effet, un tel palier ne comporte qu'un élément souple qui reste actif en toute circonstance, les liaisons frangibles ne permettent d'agir que sur l'amortissement des vibrations. Un tel palier ne permet pas d'assouplir radialement le guidage en rotation de la soufflante et d'abaisser le mode propre de cette soufflante suite à l'apparition d'un balourd accidentel au contraire de la présente invention. De plus, les moyens d'amortissement visqueux ne permettent pas l'utilisation de ce palier sur les gros turbomoteurs.

Un autre avantage de l'invention est le maintien en fonctionnement dégradé et sans moyens supplémentaires d'un positionnement axial rigoureux du palier tenu par un support de palier conforme à l'invention, après rupture de liaisons frangibles, ce maintien étant assuré au moins par l'élément élastique ne comportant pas lui-même de liaison frangible. Le maintien s'effectuant sans frottement, au contraire du dispositif divulgué par le brevet FR 2 463 853, un support de palier conforme à l'invention peut être utilisé en coopération avec un palier à effet de butée pour maintenir le positionnement axial de l'aube lui-même et reprendre la poussée axiale à laquelle cet arbre est soumis.

La présente invention est en conséquence bien adaptée à une application à l'étage de soufflante des gros turbomoteurs, ledit étage de soufflante tourillonnant sur un gros palier à effet de butée et généralement à billes, cet étage de soufflante générant l'essentiel de la poussée du turbomoteur, ladite poussée étant transmise à la structure du turbomoteur par ledit palier et ledit support de palier, même en fonctionnement dégradé.

Un autre avantage de l'invention est l'absence de dissipation thermique après rupture des liaisons frangibles, au contraire des dispositifs avec amortissement, ce qui évite de devoir disposer des moyens de refroidissement supplémentaires sur les gros turbomoteurs. Un autre avantage est la diminution du risque d'interaction rotor/stator du fait du jeu E augmenté, et du gain en diminution de masse qui en résulte.

La présente invention présente aussi l'avantage, dans son mode de réalisation préféré, de mettre en oeuvre un support de palier simple, peu coûteux et ayant une forme générale, un encombrement et des moyens de liaison au palier et à la structure du turbomoteur très semblables aux supports de palier classiques habituellement utilisés sur les turbomoteurs. La présente invention peut en conséquence être appliquée à un turbomoteur sans remettre en cause sa structure.

L'invention sera mieux comprise et les avantages qu'elle procure apparaitront plus clairement au vu de la description d'un exemple détaillé de réalisation, des résultats obtenus ainsi que des figures annexées.

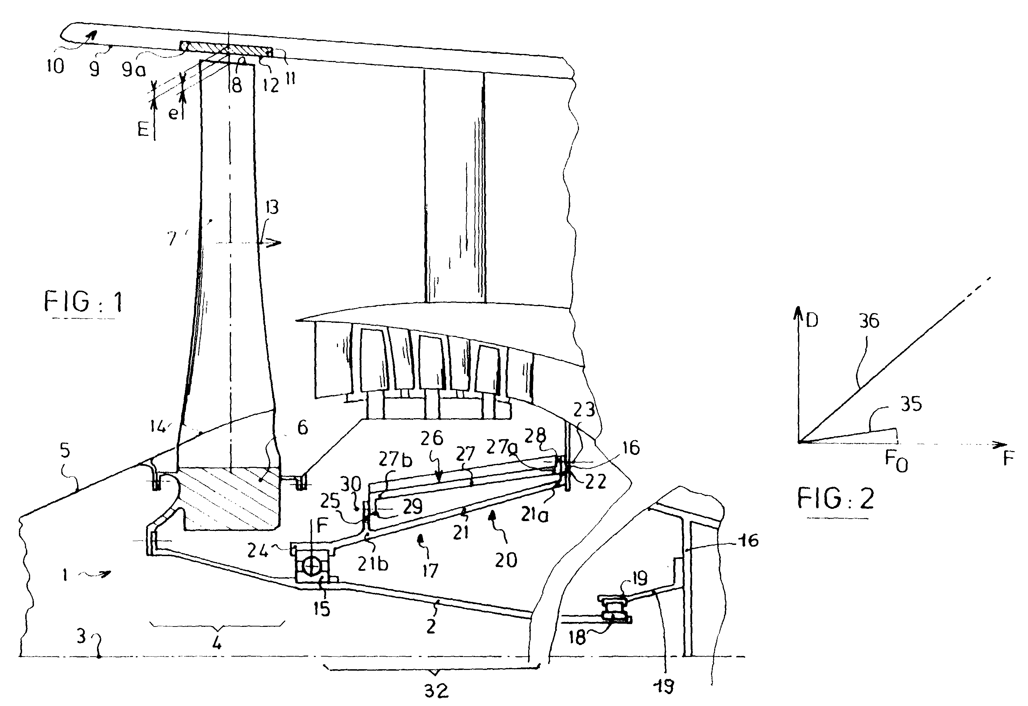

La figure 1 illustre un étage de soufflante de turbomoteur conforme à l'invention.

La figure 2 est un graphique illustrant la caractéristique d'élasticité d'un support de palier conforme à l'invention. L'abscisse représente l'effort tournant F provoquant la déformation radiale du palier, et l'ordonnée le déplacement radial D correspondant du palier.

La figure 3 est un graphique représentant l'effort tournant F exercé par le rotor sur le palier, en fonction de la vitesse V de rotation du rotor et de différents types de support de palier. L'effort tournant F en ordonné est exprimé en déca-Newton (DaN) et la vitesse de rotation V en abscisse est exprimée en tours par minute (tr/mn).

La figure 4 est un graphique représentant la consommation du jeu du rotor par rapport au stator en fonction de la vitesse de rotation V dudit rotor et des supports de paliers déjà invoqués dans la figure 4. La consommation de jeu D est en ordonnée, et la vitesse de rotation V en abscisse est exprimée en tours par minute (tr/Mn) avec la même échelle qu'à la figure 3.

Dans cet exemple de réalisation le turbomoteur est du type dit "à double flux" habituellement utilisé sur les gros avions de transport subsoniques. De tels turbomoteurs sont bien connus de l'homme du métier, et afin de ne pas alourdir inutilement cet exposé, on ne décrira que les seuls composants de ce turbomoteur nécessaires à la bonne compréhension de l'invention.

On se reportera en premier lieu à la figure 1. Le rotor 1 comporte dans sa partie centrale un arbre 2 tournant autour de l'axe géométrique de rotation 3, et dans sa partie périphérique notamment un étage de soufflante 4 solidaire de l'arbre 2, ledit étage de soufflante 4 se prolongeant vers l'avant du turbomoteur par le cône d'entrée d'air 5. L'étage de soufflante 4 comporte une jante 6 solidaire de l'arbre 2 à sa partie avant, ainsi qu'une pluralité d'aubes 7 dites de soufflante disposées radialement à la périphérie de la jante 6. Les sommets 8 des aubes 7 arrivent au voisinage de la paroi intérieure 9 d'un carter 10 entourant l'étage de soufflante 4. La partie 9a de la paroi intérieure 9 située en regard des sommets 8 des aubes 7 est tapissée par un revêtement abradable 11 dont la paroi intérieure 12 est rabotée par les sommets des aubes 8 lors des premières rotations du rotor 1, cette paroi 12 restant toutefois approximativement dans le prolongement de la paroi intérieure 9 du carter 10. On référencera e le jeu réduit ainsi constitué entre les sommets 8 des aubes 7 et la paroi intérieure 12 de l'abradable 11. On référencera aussi E le jeu entre les sommets 8 des aubes 7 et la paroi intérieure 9a du carter 10, le jeu E étant pendant le fonctionnement normal du turbomoteur occulté par l'abradable 11.

On comprend que du fait de la rotation du rotor 1, les aubes 7 en tournant selon l'axe géométrique 3 créent un flux d'air 13 d'avant en arrière entre d'une part le cône d'entrée d'air 5 prolongé par la périphérie 14 de la jante 6 et d'autre part la paroi intérieure 9 du carter 10, ce flux d'air générant la poussée produite par le turbomoteur. On comprend aussi que le jeu e génère des fuites de ce même flux d'air, ce jeu e devant en fonctionnement normal du turbomoteur être réduit afin de ne pas dégrader le rendement de l'étage de soufflante 4.

L'arbre 2 et par répercussion le rotor 1 sont guidés en rotation selon l'axe géométrique 3 et positionnés en translation par un palier 15 à billes solidaire de la structure 16 du turbomoteur par l'intermédiaire d'un support de palier 17. Ce palier 15 est disposé juste à l'arrière de l'étage de soufflante 4. L'arbre 2 est aussi guidé à l'arrière du turbomoteur par un palier à rouleaux 18 solidaire de la structure 16 du turbomoteur par l'intermédiaire d'un autre support de palier 19.

Le support de palier 17 a une forme générale de révolution autour de l'axe géométrique 3. Ce support de palier 17 comporte un premier élément flexible 20 composé d'une paroi flexible 21 tronconique dont la grande base 21a est prolongée radialement vers l'extérieur par une bride 22 fixée à la structure 16 du turbomoteur par une pluralité de boulons 23. La petite base 21b de la paroi flexible 21 se prolonge axialement par un organe 24 enserrant le palier 15, par sa bague externe et radialement vers l'extérieur par une bride mince et souple 25.

Les brides 22 et 25 ont dans cet exemple chacune la forme d'une rondelle plate d'axe géométrique 3, donc disposées dans des plans perpendiculaires à l'axe 3, lesdites brides 22 et 25 étant solidaires chacune par leur circonférence intérieure respectivement à la grande base 21a et à la petite base 21b de la paroi tronconique 21.

Le support de palier 17 comporte aussi un second élément flexible 26 composé d'une paroi flexible 27 tronconique dont la grande base 27a est prolongée radialement vers l'extérieur par une bride 28 fixée à la structure 16 par les mêmes boulons 23, la bride 28 appuyant sur la bride 22. La petite base 27b de la paroi flexible 27 se prolonge radialement vers l'intérieur par une seconde bride 29 qui arrive contre la bride 25 avec un jeu réduit.

Les brides 28 et 29 ont dans cet exemple chacune la forme d'une rondelle plate d'axe géométrique 3, donc disposées dans des plans perpendiculaires à l'axe 3, ladite bride 28 étant solidaire par sa circonférence intérieure à la grande base 27a de la paroi 27, alors que la bride 29 est solidaire par sa circonférence extérieure à la petite base 27b de la paroi 27.

Les brides 25 et 29 sont rendues solidaires par des éléments de liaison 30 frangibles, c'est à dire susceptibles de se rompre sous l'effet d'un effort radial F prédéterminé appliqué sur le palier 15. Les éléments frangibles 30 peuvent être par exemple des boulons disposés parallèlement à l'axe géométrique 3 dont la section est affaiblie et calculée en fonction de l'effort F qui doit en provoquer le cisaillement.

Le fonctionnement du support de palier 17 est le suivant. En marche normale, les éléments de liaison frangibles 30 ne sont pas rompus et lient les brides 25 et 29 l'une contre l'autre, de sorte que le palier 15 est maintenu simultanément par l'intermédiaire les parois flexibles 21 et 27 dont les raideurs s'additionnent entre elles et se combinent avec la raideur de la structure 16 du turbomoteur. Cette raideur est élevée et permet juste d'absorber l'effort F résultant du faible balourd de fabrication de sorte que l'espace e entre les sommets 8 des aubes 7 et la paroi intérieure 12 de l'abradable 11 est minimal, ce qui réduit au mieux les fuites d'air.

Lorsque l'effort F dépasse un minimum préétabli sous l'effet essentiellement de la rupture d'un morceau d'aube 7, les éléments de liaison frangibles 30 se rompent de sorte que l'élément flexible 26 ne peut plus participer au maintien du palier 15, cette fonction restant toutefois assure par l'élément flexible 20 seul. Le palier 15 est donc maintenu radialement avec une raideur réduite qui est celle de l'élément flexible 20 combiné à celle de la structure 16 du turbomoteur. L'amplitude D du déplacement radial de l'arbre 2 augmente, et la bride 25 se déplace par rapport à la bride 29 suivant un plan perpendiculaire à l'axe géométrique 3.

Les diamètres des grandes bases 21a et 27a peuvent être voisins. Avantageusement, on donnera à la petite base 27b un diamètre très supérieur à celui de la petite base 21b, et on rapprochera les éléments de liaison 30 de l'une ou de l'autre des bases 21b ou 27b. Ceci permet d'augmenter la largeur radiale de l'une des brides 25 ou 29, tout en la liant au voisinage du bord. Cette bride 25 ou 29 plus large est plus souple axialement, c'est à dire parallèlement à l'axe géométrique 3, ce qui réduit les contraintes axiales imposées aux éléments de liaison frangibles 30.

Avantageusement, la bride 25 sera située à l'avant de la bride 29. De ce fait, après la rupture des liaisons frangibles 30, l'étage de soufflante 4 continuant à assurer une poussée importante et tendant à tirer vers l'avant du turbomoteur l'arbre 2 et le palier 15, la bride 25 se déplacera légèrement vers l'avant du fait de la flexibilité résiduelle de la paroi 21 suivant une direction axiale. La bride 25 n'étant pas alors en contact avec la bride 29 ne frottera pas contre elle lorsque le rotor se déplacera dans un plan perpendiculaire à l'axe géométrique 3 sous l'effet du balourd accidentel. Ceci évite l'usure par friction l'une contre l'autre des faces en regard des brides 25 et 29 ainsi qu'un important dégagement de chaleur qui provoquerait un échauffement supplémentaire du palier 15 et de son support 17, un tel échauffement étant préjudiciable à la résistance mécanique de ces deux organes 15 et 17 qui restent très sollicités.

Dans le cas où la bride 25 est placée à l'avant de la bride 29, et afin de permettre l'assemblage des éléments flexibles 20 et 26, on taillera dans les brides 25 et 29 tout le long de leurs circonférences une alternance de créneaux et d'évidements de forme complémentaires, les créneaux de chaque bride étant susceptibles de passer par les évidements de l'autre bride lorsque l'élément 27 est amené autour de l'élément 20 par un mouvement de translation d'avant en arrière suivant l'axe 3. Lorsque les brides 22 et 28 sont arrivées en contact, il suffit alors de faire pivoter l'élément 26 par rapport à l'élément 20 autour de l'axe 3 afin d'amener en regard les uns des autres les créneaux des brides 25 et 29, ainsi que les perçages par lesquels on fera passer les éléments de liaison 23 et 30.

Le déplacement radial D sous l'effet du balourd accidentel du palier 15 s'accompagne d'un déplacement sensiblement équivalent de la trajectoire des sommets 8 des aubes 7. Sous l'effet de la rotation de l'étage de soufflante 4 combiné à ce déplacement radial D, les sommets 8 des aubes 7 viennent raboter l'abradable 11 sur une profondeur égale au déplacement radial D. L'homme du métier définira par ses méthodes de calcul et expérimentation habituelle un jeu E > D suffisant pour que les sommets 8 ne viennent pas au contact de la paroi intérieure 9a du carter 10, ceci pour un balourd maximal préétabli et une plage de vitesse de rotation de l'étage de soufflante 4 préétabli, en fonction de la raideur de l'élément flexible 20 restant seul actif, en fonction aussi des caractéristiques particulières du rotor 2 et de la structure 16 du turbomoteur.

On comprend que l'homme du métier sera conduit à dimensionner le jeu E en fonction du degré maximal de dommage, c'est à dire du balourd maximal pour lequel il veut rendre possible le maintien du turbomoteur en fonctionnement.

Un rotor de turbomoteur comporte plusieurs étages d'aubes 31 regroupés en ensembles fonctionnels tels le compresseur basse pression 32 tournant à l'intérieur d'un carter 33, ledit compresseur 32 étant situé à l'arrière de l'étage de soufflante 4, donc plus près du palier arrière 18. Le déplacement radial de l'étage de soufflante 4 ayant une répercussion sur le déplacement radial de chacun des autres étages 31, l'homme du métier disposera de la même manière un jeu suffisant entre les sommets des aubes de ces étages 31 et la paroi intérieure du carter 33 qui les entoure, ce jeu étant de la même manière occulté par un abradable.

On se reportera maintenant au graphique de la figure 2. Le segment de droite 35 représente le déplacement radial D du palier 15 en fonction de l'effort tournant F pendant le fonctionnement normal du turbomoteur. Sous l'effet de la déformation élastique du support de palier, ce déplacement est linéaire et reste à des valeurs très faibles, juste suffisantes pour absorber le balourd de fabrication du rotor. Lorsque l'effort tournant F atteint un seuil préétabli Fo correspondant au balourd minimum à partir duquel on veut faire changer le fonctionnement du support de palier 17 et du turbomoteur, les éléments frangibles se rompent, le palier devient plus souple et le déplacement D en fonction de F est représenté par la demi-droite 36 dont la pente D/F est très supérieure à celle du segment de droite 35.

On se reportera maintenant simultanément à la figure 3 et à la figure 1. Les valeurs en abscisse représentent les vitesses de rotation du rotor 1. On repérera la vitesse de ralenti en vol V1 = 2000 tr/mn (tours par minute) et la vitesse maximale correspondant au régime pleins gaz utilisé au décollage, V2 = 5000 tr/mn, le moteur étant utilisé dans la plage ainsi définie pendant le vol de l'avion. Les valeurs en ordonnée représentent l'effort tournant F en daN (déca-newton) que le rotor 1 exerce sur la structure 16 par l'intermédiaire du palier 15 et du support de palier 17. L'ensemble des courbes est donné pour un balourd de 3 kg.m correspondant approximativement à la rupture du tiers supérieur d'une aube de soufflante.

La courbe 40 représente l'effort tournant F dans le cas d'un support de palier 17 classique avec un jeu E réduit entre les sommets 8 des aubes 7 et la paroi intérieure 9a du carter 10. Sous l'effet de l'effort tournant F le support de palier 17 et la structure 16 se déforment élastiquement, et les sommets 8 des aubes 7 rabottent l'abradable 11 et arrivent au contact de la paroi 9a. Le carter 10 assure alors un guidage supplémentaire de l'étage de soufflante 4 en coopération avec le palier 15. La raideur radiale du guidage est dans ces conditions augmentée et correspond à la raideur du carter 10 augmentée de celle du support de palier 17 combinée à celle de la structure 16, ce qui a pour effet de déplacer le mode propre 40a du rotor 1 au-delà de la vitesse maximale V2. Malgré cela, l'effort F atteint 100.10³DaN à 5000 tr/mn et reste supérieur à 25.10³Dan au-dessus de 2000 tr/mn. De tels efforts sont difficiles à supporter par la structure 16 du turbomoteur ainsi que par la structure de l'avion, le pilote de l'avion devant en conséquence arrêter le moteur le plus rapidement possible.

La courbe 41 représente ce même effort tournant avec le même support de palier 17 et un jeu E suffisant pour que les sommets 8 des aubes 7 ne viennent pas frotter contre la paroi intérieure 9a du carter 10. Le mode propre 41a est dans cet exemple situé dans le 1er tiers inférieur du domaine de vol V1-V2. L'effort tournant F reste supérieur à 25.10³ DaN dans le domaine de vol et atteint 100.10³ DaN avec le mode propre 41a qui est situé cette fois dans le tiers inférieur du domaine de vol. Le simple agrandissement du jeu E ne peut en conséquence apporter une solution au problème posé.

Les courbes 42, 43 et 44 représentent pour trois niveaux de souplesse différents l'effort tournant F avec un support de palier 17 conforme à l'invention, les liaisons frangibles 30 étant rompues, le jeu E étant supposé suffisamment grand pour que les sommets 8 des aubes 7 ne viennent pas frotter contre la paroi intérieure 9a du carter 10.

La souplesse du support de palier étant augmentée et allant croissante lorsque l'on passe de la courbe 42 à la courbe 43, et de la courbe 43 à la courbe 44, les modes propres correspondants 42a, 43a et 44a sont passés en-dessous de la vitesse de ralenti en vol V1. Le résultat est que l'effort tournant F est abaissé dans le domaine de vol V1-V2 et reste compris dans les fourchettes de 24 à 8 DaN dans le cas de la courbe 42, 7,8 à 4,4 DaN dans le cas de la courbe 43 et 3,3 à 2,2 DaN dans le cas de la courbe 44. L'effort tournant est ainsi abaissé dans des proportions importantes, notamment dans le cas de la courbe 44, et peut de ce fait être supporté dans de meilleures conditions par la structure du turbomoteur et de l'avion. Du fait que l'effort tournant F diminue dans le domaine de vol V1-V2 lorsque la vitesse de rotation V augmente, le fonctionnement du turbomoteur est encore amélioré aux régimes élevés, et notamment au régime de plein gaz V2.

On se reportera maintenant au graphique de la figure 4. L'axe des abscisses est identique à celui du graphique de la figure 3, et l'axe des ordonnées représente maintenant le déplacement relatif D de l'étage de soufflante 4 par rapport au carter dans un plan perpendiculaire à l'axe géométrique 3. Les courbes 45, 46, 47, 48 et 49 représentent ce déplacement D dans les conditions respectivement des courbes 40 à 44 du graphique de la figure 3. Le déplacement D est évidemment maximal aux vitesses de rotation correspondant aux modes propres, de la soufflante, soient respectivement 45a, 46a, 47a, 48a et 49a.

Dans le cas de la courbe 45, le mode propre 45a étant positionné au-delà du régime de plein gaz V2 le déplacement est important au régime de plein gaz et décroit avec la vitesse de rotation dans la plage V1-V2 d'utilisation du turbomoteur.

Dans le cas de la courbe 46, le déplacement D est important dans tout le domaine de vol V1-V2 et passe par un maximum dans le tiers inférieur de ce domaine de vol.

Dans le cas des figures 47, 48 et 49 les modes propres respectifs 47a, 48a et 49a étant positionnés en-dessous du régime de ralenti en vol V1, le déplacement D est plus important au régime de ralenti en vol V1 et décroit lorsque la vitesse de rotation augmente. Ces courbes montrent en conséquence que le fonctionnement du turbomoteur est amélioré aux régimes élevés et en particulier au plein gaz V2, cet avantage ayant déjà été mis en évidence avec le graphique de la figure 3.

Avantageusement, l'homme du métier donnera au jeu E une valeur au moins égale au déplacement D donné par les courbes 47, 48, 49 à la vitesse V1 soient respectivement les consommations de jeu D1, D2 et D3. Ainsi, pendant la phase de vol ou d'atterrissage, le turbomoteur tournant à des vitesses supérieures à V1, les sommets 8 des aubes 7 ne toucheront pas la paroi 9a du carter 10, conformément à l'effet principal recherché.

Il faut toutefois remarquer que lorsque le pilote arrêtera le turbomoteur endommagé, la vitesse de rotation V passera sur le mode propre 47a, 48a ou 49a et les sommets 8 des aubes 7 viendront alors frotter contre la paroi intérieure 9a du carter 10. Ce phénomène n'aura cependant pas de conséquence grave, car il se produit en dehors du domaine de vol V1-V2 pendant une durée très réduite avec une force d'appui faible et une dissipation possible d'énergie égale au plus à l'énergie cinétique restant dans le rotor en-dessous du régime de ralenti en vol V1. On remarquera aussi que les jeux D1, D2 ou D3 restent inférieurs au jeu D4 correspondant au mode propre 46a de la courbe 46, avec un rapport D3/D4 = 1/3 dans le cas de la courbe 49.

On notera aussi que du fait de l'abaissement des jeux E à des valeurs D1, D2 ou D3, les courbes correspondantes 47, 48 et 49 ne représentent plus les déplacements réels du rotor qui sont limités approximativement à ces jeux D1, D2 OU D3. Il en va de même pour les courbes 42, 43 et 44.

Bien que l'abaissement du mode propre 42a, 43a ou 44a et 47a, 48a ou 49a permettent d'abaisser l'effort tournant F et le déplacement radial D, l'homme du métier maintiendra avantageusement ce mode propre à une valeur au moins égale à V1/4 et de préférence à V1/2, afin de donner à l'élément élastique 20 une raideur suffisante pour limiter le déplacement radial du rotor 1 sous l'effet d'une accélération radiale provenant par exemple d'un changement de direction de l'avion. Ceci permet d'empêcher les sommets 8 des aubes 7 d'arriver au contact de la paroi intérieure 9a du carter 10 au moins pour des accélérations inférieures à un seuil préétabli, et par conséquent d'augmenter la manoeuvrabilité de l'avion.

Les courbes 41 ou 42 des graphiques de la figure 3 montrent que l'effort tournant F et le déplacement radial D diminuent lorsque la vitesse de rotation V augmente. Ainsi, lorsque l'avion évolue à proximité du sol avec un turbomoteur endommagé par exemple au moment du décollage, le pilote peut encore monter ou maintenir le turbomoteur au régime de pleins gaz V2 pour passer par dessus les obstacles qui se présenteraient devant lui.

Un autre avantage de l'invention est que l'effort tournant F et la consommation de jeu D peuvent être réduits à des niveaux très bas tout en maintenant le positionnement axial du rotor par l'intermédiaire d'un palier à effet de butée ; par exemple à bille, ce positionnement se faisant sans dissipation de chaleur par frottement, au contraire des dispositifs divulgués par les brevets FR 2 463 853 ET US 4 527 910 précités. L'invention est donc utilisable sans moyens de refroidissement supplémentaires sur les gros turbomoteurs.

Un autre avantage encore de l'invention est que le support de palier 17 mis en oeuvre a, au moins dans sa forme de réalisation préférée, une forme générale, un encombrement et des modes de liaison avec le palier 15 et la structure 16 du turbomoteur voisins des paliers de types connus et habituellement utilisés sur les turbomoteurs. En conséquence, l'invention est applicable sans remettre en cause les structures habituelles des turbomoteurs.

Un autre avantage enfin est que le risque d'interaction entre le carter et le rotor est réduit puisque le jeu E est augmenté.

La présente invention ne saurait être limitée à l'exemple de réalisation qui vient d'en être donné. Bien que son application la plus importante soit la prévention d'une rupture d'aube de soufflante, elle peut être appliquée aussi à d'autres causes de balourd des rotors, en particulier une rupture d'aube sur un étage de compresseur ou de turbine, par l'adaptation des jeux E et des supports de palier, par exemple 19, conformément à l'invention.

Les turbomoteurs et notamment les plus gros peuvent comporter un palier supplémentaire maintenant l'arbre 2 et disposé plus à l'arrière du palier 15 vers le palier 18, l'arbre 2 étant assoupli. Dans ce cas, le support de palier supplémentaire résultant d'une telle disposition sera avantageusement configuré conformément à l'invention.

Un support de palier peut aussi comporter N>2 éléments élastiques, N-1 de ces éléments comportant chacun des liaisons frangibles dont la résistance va en croissant, afin de se prémunir pour des dommages allant croissant.

## Revendications

1. Procédé permettant de maintenir en fonctionnement un turbomoteur pour aéronef après apparition d'un balourd accidentel sur un rotor, ledit maintien en fonctionnement s'effectuant à une vitesse de rotation au moins égale à la vitesse V1 de ralenti en vol du turbomoteur, ledit balourd restant inférieur à un maximum préétabli, ledit rotor (1) sujet au balourd étant monté sur des paliers (15, 18) reliés chacun à la structure (16) du turbomoteur par des supports de palier (17, 19), au moins un support de palier (17,19) présentant au moins deux niveaux de raideur (35,36), un niveau de raideur (35) dit "normal" correspondant à un mode propre du rotor (1) supérieur à la vitesse V1 de ralenti en vol du turbomoteur, ledit rotor (1) comportant à sa périphérie (14) une pluralité d'aubes (7) se déplaçant à l'intérieur d'un carter (10) avec un jeu radial E entre les sommets (8) desdites aubes (7) et la paroi intérieure (9a) dudit carter (10), **caractérisé en ce que** :
a) le support de palier comporte au moins un niveau de raideur dit "faible" correspondant à un mode propre (42a, 43a, 44a, 47a, 48a, 49a) du rotor (1) inférieur à V1,
b) on dispose un jeu E au moins égal au déplacement radial D du rotor (1) à la vitesse V1, sous l'effet du balourd maximal préétabli, le support de palier étant à un niveau de raideur faible,
c) on fait passer le support de palier (17, 19) du niveau de raideur "normal" (35) à un niveau de raideur "faible" (36) après apparition d'un balourd au moins égal à un minimum préétabli.

2. Procédé conforme à la revendication 1, **caractérisé en ce que** le support de palier (17, 19) est le support du palier (15) de l'étage de soufflante (4).

3. Procédé conforme à la revendication 1 ou 2, **caractérisé en ce que** le passage du niveau de raideur "normal" (35) au niveau de raideur faible (36) se fait par rupture d'éléments de liaison frangibles (30) sous l'effet du balourd minimal préétabli.

4. Procédé conforme à l'une quelconque des revendications 1 à 3, **caractérisé en ce que** le mode propre (42a, 43a, 44a, 47a, 48a, 49a) est maintenu à une valeur supérieure au quart du régime de ralenti en vol, soit V1/4 afin d'améliorer la manoeuvrabilité de l'avion.

5. Support de palier pour mettre en oeuvre le procédé selon l'une quelconque des revendications 1 à 4, ce support de palier (17, 19) comportant N > 1 éléments élastiques (20, 26) en parallèle reliant chacun simultanément un palier (15, 18) à la structure (16) du turbomoteur, **caractérisé en ce que** N-1 éléments élastiques (26) effectuent cette liaison avec des éléments frangibles (30).

## Patentansprüche

1. Verfahren, um ein Luftfahrzeug-Turbotriebwerk auch nach dem unerwarteten Auftreten einer Unwucht an einem Rotor in Betrieb zu halten, wobei dieses In-Betrieb-Halten bei einer Drehgeschwindigkeit von mindestens der Leerlauf-Geschwindigkeit V1 des Turbotriebwerks im Flug geschieht, wenn diese Unwucht unter einem vorher festgesetzten Maximalwert bleibt, da dieses Triebwerk (1), das die Unwucht erleidet, auf Lagern (15, 18) gelagert ist, die jeweils durch Lagerträger (17, 19) mit dem Aufbau (16) des Triebwerks verbunden sind, wobei mindestens ein Lagerträger (17, 19) mindestens zwei Steifegrade (35, 36) aufweist, wobei ein sogenannter "normaler" Steifegrad (35) einer besonderen Betriebsart des Rotors (1) mit mehr als der Leerlauf-Geschwindigkeit V1 des Turbotriebwerks im Flug entspricht, wobei dieser Rotor (1) an seinem Außenumfang (14) eine Vielzahl von Schaufeln (7) aufweist, die sich im Inneren eines Gehäuses (10) mit einem radialen Spiel E zwischen den Spitzen (8) dieser Schaufeln (7) und der Innenwand (9a) dieses Gehäuses (10) bewegen,
**dadurch gekennzeichnet,**
**dass** :
a) der Lagerträger mindestens einen sogenannten "schwachen" Steifegrad aufweist, der einer besonderen Betriebsart (42a, 43a, 44a, 47a, 48a, 49a) des Rotors (1) mit weniger als V1 entspricht,
b) ein Spiel E, das mindestens gleich der radialen Verschiebung D des Rotors (1) bei der Geschwindigkeit V1 unter der Einwirkung der zuvor bestimmten maximalen Unwucht ist, zur Verfügung steht, wenn sich der Lagerträger im Zustand des schwachen Steifegrads befindet,
c) der Lagerträger (17, 19) nach Auftreten einer Unwucht, die mindestens gleich einem zuvor bestimmten Minimalwert ist, von dem "normalen" Steifegrad (35) auf einen "schwachen" Steifegrad (36) übergeht.

2. Verfahren nach Anspruch 1,
**dadurch gekennzeichnet,**
**dass** der Lagerträger (17, 19) die Halterung des Lagers (15) der Gebläsestufe (4) ist.

3. Verfahren nach Anspruch 1 oder 2,
**dadurch gekennzeichnet,**
**dass** der Übergang vom "normalen" Steifegrad (35) auf einen "schwachen" Steifegrad (36) durch Bruch von Sollbruch-Verbindungselementen (30) unter der Einwirkung der zuvor bestimmten minimalen Unwucht erfolgt.

4. Verfahren nach einem der Ansprüche 1 bis 3,
**dadurch gekennzeichnet,**
**dass** die besonderen Betriebsart (42a, 43a, 44a, 47a, 48a, 49a) auf einem Wert von mehr als einem Viertel der Leerlauf-Drehgeschwindigkeit im Flug, d.h. V1/4, gehalten wird, um die Manövrierbarkeit des Flugzeugs zu verbessern.

5. Lagerträger zur Durchführung des Verfahrens nach einem der Ansprüche 1 bis 4, wobei dieser Lagerträger (17, 19) N > 1 federnde Elemente (20, 26) aufweist, die parallel angeordnet sind und jeweils gleichzeitig ein Lager (15, 18) mit dem Aufbau (16) des Turbotriebwerks verbinden,
**dadurch gekennzeichnet,**
**dass** N-1 federnde Elemente (26) diese Verbindung mit Sollbruch-Elementen (30) herstellen.

## Claims

1. A process for maintaining an aircraft turboengine in operation after the appearance of an accidental unbalance of a rotor, said maintenance in operation being effected at a speed of rotation at least equal to the engine in-flight idling speed V1, said unbalance remaining below a predetermined maximum, said rotor (1) which is subject to unbalance being mounted on bearings (15,18) each connected to the engine structure (16) by bearing supports (17,19), at least one bearing support (17,19) having at least two stiffness levels (35,36), a "normal" stiffness level (35) corresponding to a mode of the rotor (1) greater than the engine in-flight idling speed V1, said rotor (1) comprising on its periphery (14) a number of blades (7) moving inside a casing (10) with a radial clearance E between the blade tips and the inner wall (9a) of the casing (10), **characterised in that**:
(a) the bearing support comprises at least one "reduced" stiffness level corresponding to a mode (42a, 43a, 44a, 47a, 48a, 49a) of the rotor below V1;
(b) a clearance E is provided which is at least equal to the radial displacement D of the rotor (1), at the speed V1, resulting from the predetermined maximum unbalance, the bearing support being at a reduced stiffness level; and
(c) the bearing support (17,19) changes over from the "normal" stiffness level (35) to a "reduced" stiffness level (36) after the appearance of an unbalance at least equal to a predetermined minimum.

2. A process according to claim 1, **characterised in that** the bearing support (17,19) is the support of the bearing (15) of the fan stage (4).

3. A process according to claim 1 or claim 2, **characterised in that** the changeover from the "normal" stiffness level (35) to the reduced stiffness level (36) is effected by the rupturing of frangible elements (30) caused by the predetermined minimum unbalance.

4. A process according to any of claims 1 to 3, **characterised in that** the rotor mode (42a, 43a, 44a, 47a, 48a, 49a) is maintained at a value greater than one-quarter of the engine in-flight idling speed - i.e. V1/4 - in order to improve the manoeuvrability of the aircraft.

5. A bearing support for carrying out the process according to any of claims 1 to 4, the bearing support (17,19) comprising N>1 resilient elements (20,26) disposed in parallel and each simultaneously connecting a bearing (15,18) to the turboengine structure (16), **characterised in that** N-1 resilient elements (26) make this connection to frangible elements (30).
